# EUROPEAN PATENT APPLICATION

(11) **EP 1 239 569 A2**
(43) Date of publication of application: **11.09.2002**
(21) Application number: 01115040.6
(22) Date of filing: 21.06.2001
(51) Int. Cl.: H02K 1/27

(54) **Magnet rotor and high-output AC machine having the same**

(30) Priority: 07.03.2001 JP 2001062850
(71) Applicant: ISUZU CERAMICS RESEARCH INSTITUTE CO., LTD., Fujisawa-shi, Kanagawa-ken (JP)
(72) Inventor: Shiratori, Satoru, Fujisawa-shi, Kanagawa-ken (JP)
(74) Representative: Weber, Roland, Dipl.-Chem.

(57) **Abstract**

In the magnet rotor 1 in which the outer peripheral shape of the back yoke 3 composed of an electromagnetic steel plate or by laminating ordinary thin plates 3a having magnetism is formed in polygon and a permanent magnet 5 is adhered and attached to a fitting plane 4 of the back yoke 3, the permanent magnet 5 does not cause any rotation gap to the back yoke 3. Also, since the back yoke 3 is formed in polygon, only the permanent magnet 5 can be made thicker in a center part without changing a contact width and leak magnetic fluxes between N and S poles, the magnetic flux density is increased and the output is increased. Further, since a sleeve 10 is press-set into a step part 12 of an outer peripheral face of the permanent magnet 5, when the magnet rotor 1 is integrated in a stator 11, a clearance of the permanent magnet 5 and the stator 11 can be reduced and the output can be increased dynamically.

## Description

### Background of the Invention:

The present invention relates to a magnet rotor comprising a rotor attaching a permanent magnet to a rotary shaft by way of a back yoke and a high-output AC machine utilizing the same.

Recently, in generators and motors, AC generators and AC motors using a rotor attaching a permanent magnet to a rotary shaft have become increasingly used with engines and industrial equipment for reasons of high outputs and simple construction thereof.

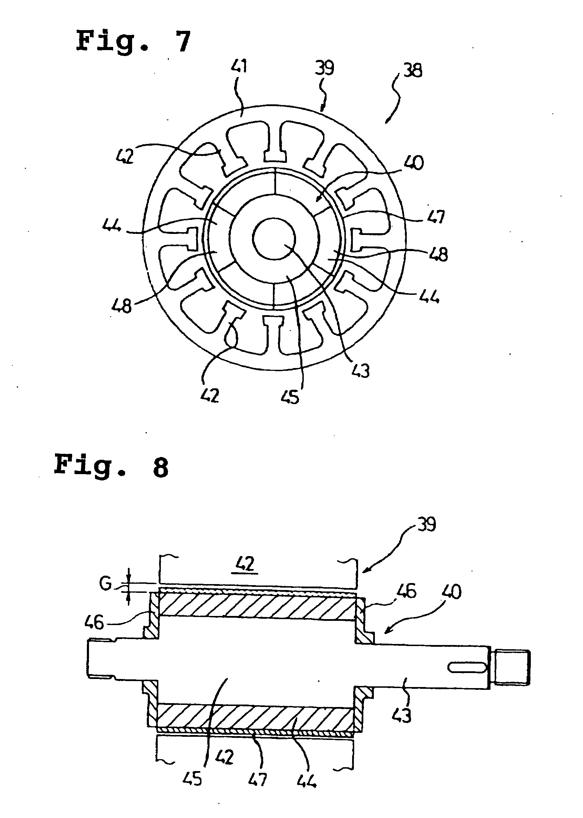

One of constructions of the prior art of these high-output AC generators is shown in Fig.7 and Fig.8.

This AC generator 38 with a high output is composed of a ring shaped stator 39 fixed to a housing not illustrated, and a rotor 40 arranged in a center part of the stator 39. Further, the stator 39 is composed of a ring part 41 fixed to the housing not illustrated, and a tooth part 42 discretely arranged along a periphery of the ring part 41 and extending inward in a radial direction, and a coil not illustrated is wound round the tooth part 42.

On the other hand, for the rotor 40 arranged in the center of the stator 39, a back yoke 45 is fixed to a rotary shaft 43, and on this back yoke 45 a cylindrically arranged permanent magnet 44 is integrally fixed by way of a sleeve 47.

The magnet 44 is made into multi-polar by laminating magnet pieces 48 of which each single pole is magnetized, and a length of the magnet 44 is formed in the same as that of the yoke 45.

Besides, the permanent magnet 44 is set in the back yoke 45, and as shown in Fig.8, held between a pair of plates 46 having a pan spring effect and fixed to the back yoke 45. Also, to prevent the permanent magnet 44 from being broken during rotation, as shown in Fig.8, a sleeve 47 made of a carbon fiber reinforced plastic is pressure fitted all over an outer peripheral face of the permanent magnet 44.

However, in a high-output AC generator of the prior art, since a method fixing the permanent magnet 44 to the back yoke 45 using a pair of plates 46, 46 having a pan spring effect shown in Fig.8 was used as a fixing method of the permanent magnet to the back yoke, contact faces of the back yoke 45 and permanent magnet 44 were circular, and, as a difference in linear expansion coefficient existed between back yoke 45 and permanent magnet 44, there was a problem that the permanent magnet 44 rotated relatively with the back yoke 45, namely a rotation gap occurred when a high rotational torque worked.

Also, in the high-output AC generator of the prior art, the permanent magnet is made multi-polar after magnetizing each single pole to secure a required high output. However, in the conventional fixing method of the permanent magnet 44, there is a problem that the assembly work is difficult because a suction force is extreme between magnets.

Besides, since the permanent magnet 44 is structurally made multi-polar after magnetizing each single pole, it is necessary to prevent the permanent magnet 44 from jumping out due to a centrifugal force during rotation, and so the permanent magnet 44 is reinforced by pressure fitting the sleeve 47 covering all over the outer peripheral face. Thus, in addition to the permanent magnet 44 being covered all over the outer peripheral face by the sleeve 47, as a clearance G between stator 39 and permanent magnet 44 cannot be reduced exceeding a thickness of the sleeve 47, there is a problem of a limit in obtaining a high output.

### Summary of the Invention:

The present invention is devised to solve above-mentioned problems and is aimed to surely prevent the rotation gap between back yoke and permanent magnet as well as to provide a magnet rotor that can obtain a high output and a high-output AC machine providing it.

The magnet rotor to attain aforementioned objects and the high-output AC machine using the same are composed having the following features.
1. First, in the magnet rotor, in particular in a magnet rotor having a back yoke provided at a rotary shaft and a permanent magnet arranged along an outer peripheral face of the back yoke, said back yoke is composed of an electromagnetic steel plate or by laminating thin plates made of ordinary magnetic bodies and the outer peripheral face is formed in polygon, of which each face is formed as a fitting plane, said permanent magnet is composed of a plurality of magnet pieces each having an opposing plane in its inner face corresponding to said fitting plane, and by adhering said opposing planes of said magnetic pieces to the fitting planes all round the periphery of said back yoke and by press-setting a sleeve on the outer peripheral face of said permanent magnet, said permanent magnet is fixed to said back yoke.
   According to the magnet rotor composed as above, since the outer peripheral face of the back yoke is polygonally formed, namely a cross-sectional shape vertical to the rotary shaft of the back yoke is made polygonal so as to attach the permanent magnet by adhering to the fitting plane forming the outer peripheral face of the back yoke, the permanent magnet does not cause any rotation gap to the back yoke.
   Also, by making the cross-sectional shape of the back yoke polygonal, only the permanent magnet can be made thicker without changing a contact width and leak magnetic fluxes between N and S poles, and so the magnetic flux density is increased and the output is increased.
   Also, by the increase in output, it is possible to secure the output as ever even when the magnet, which was formerly assembled by magnetizing each single pole to secure a high output, is formed with a uniform magnetization with a low rate of magnetization. Besides, the increase in output will also make it possible to make the magnet rotor compact.
   Besides, in aforementioned magnet rotor, since said polygonal back yoke is composed of an electromagnetic steel plate or by laminating ordinary thin plates having magnetism, namely composed of a lamination of polygonal thin plates, resulting in no need of cutting a rotation bearing part, machining is made easy and production costs are lowered.
2. Also, a pair of nonmagnetic plates to hold said permanent magnet from both sides are attached to said rotary shaft.
3. Further, a step part formed lower than the outer peripheral face is provided at both end parts in an axial direction of the outer peripheral face of said permanent magnet, and said sleeve is press-set in the step part.
   According to the magnet rotor composed as above, the sleeve is provided at both end parts of the permanent magnet and a flexural stress is generated toward a center part of the permanent magnet by an action of a centrifugal force, but since the permanent magnet can be made thicker by forming the cross-sectional shape of the back yoke polygonal, there is no particular problem even a construction having the sleeve only at both end parts, and not all round the outer peripheral face of the permanent magnet, is applied to.
   Rather, since an area of the sleeve covering the outer peripheral face of the permanent magnet is made very small by this composition and since the sleeve is press-set into the step part, resulting in a reduction in difference between the outer peripheral face of the sleeve and the outer peripheral face of the permanent magnet, when the magnet rotor is assembled into a stator, a clearance C of permanent magnet and stator can be made small, and when the magnet rotor is applied to a generator, the output is considerably increased.
4. Also, in aforementioned magnet rotor, said permanent magnet is arranged in plurality in parallel in an axial direction.
   According to the magnet rotor of this composition, when a plurality of permanent magnets are arranged in parallel in an axial direction, step parts are formed at both ends of each permanent magnet and a sleeve is press-set into these step parts, and by adopting a composition like this, the composition is also applicable to a back yoke with a large length, too.
5. Also, in aforementioned magnet rotor, said permanent magnet is bonded with a bonding agent at said mutually neighboring magnet pieces.
6. Besides, said permanent magnet and said back yoke can be either bonded with a bonding agent having a low Young's modulus and a high coefficient of thermal expansion, such as a silicon rubber bond, or fixed with a resin having a high Young's modulus, such as an epoxy resin.
   In particular, it is recommended that said permanent magnet and said back yoke be bonded with a silicon rubber bond and yet as sleeve a carbon fiber reinforced plastic be used.
7. Also, in aforementioned magnet rotor, said sleeve preferably be made of a carbon fiber reinforced plastic or a nonmagnetic metal, and said plates preferably be made of a nonmagnetic material like SUS304 stainless steel and Inconel.
   Further, this magnet rotor can be magnetized integrally with the rotary shaft by a magnetizing machine after fixing said permanent magnet to said back yoke and adjusting the balance of said rotary shaft based on a bearing part as reference.
   Therefore, according to the magnet rotor, since the magnetizing operation can be done after assembling the permanent magnet into the back yoke, the balance adjustment of the assembled magnet rotor can be made easily.
8. Besides, an AC machine with a high output providing aforementioned magnet rotor has a ring part fixed to a housing, a tooth part extending inward from the ring part along a radial direction, a stator made up with a coil wound round the tooth part, and any one of aforementioned magnet rotors arranged in said ring part of the stator.

That is, by arranging the magnet rotor composed as above in a hole formed in a center part of the stator formed with the ring part fixed to the housing, the tooth part extending inward from said ring part along the radial direction and the coil wound round said tooth part.

### Brief Description of the Drawings:

Fig.1 is a cross section of a magnet rotor of a first embodiment of the present invention.

Fig.2 is a side view showing a major part of a high-output AC generator integrating the magnet rotor of Fig.1.

Fig.3 is a front view of thin plates composing a back yoke of the first embodiment of the present invention.

Fig.4 is a side view of the thin plates shown in Fig.3.

Fig.5 is a cross section of a magnet rotor of a second embodiment of the present invention.

Fig.6 is a side cross section of a magnet rotor applied to a retarder brake unit of a third embodiment of the present invention.

Fig.7 is a side vie of a high-output AC generator providing a magnet rotor of the prior art.

Fig.8 is a cross section of the magnet rotor of the prior art.

Fig.9 is a side cross section of a magnet rotor applied to a retarder brake unit of the prior art.

### Detailed Description of the Invention:

In the following, magnet rotors of embodiments of the present invention and high-output AC machines proving the same are described by referencing drawings.

### (First Embodiment)

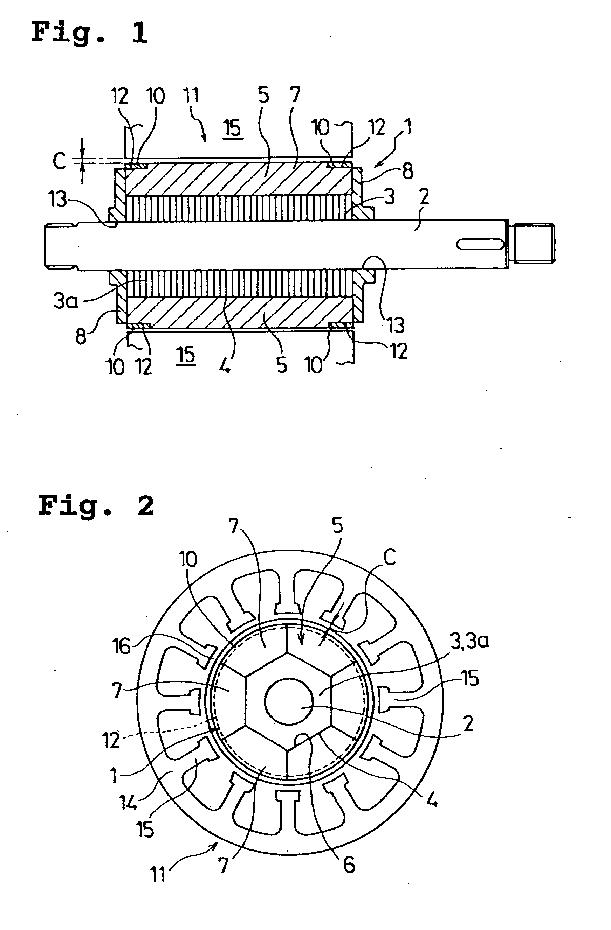

Fig.1 is a cross section showing a magnet rotor of the first embodiment of the present invention, and Fig.2 is a side view showing a high-output AC generator integrating the magnet rotor of Fig.1 and removing plates.

The magnet rotor 1 has a back yoke 3 provided at a rotary shaft 2 and a circumferential permanent magnet 5 attached to an outer peripheral face of the back yoke 3.

In the composition of Fig.1, the back yoke 3 is composed, around the rotary shaft 2, of an electromagnetic steel plate or by laminating a plurality of ordinary thin plates 3a having magnetism, with an outline formed in polygon, along a length direction of the rotary shaft 2 and pressure fixing into the rotary shaft 2.

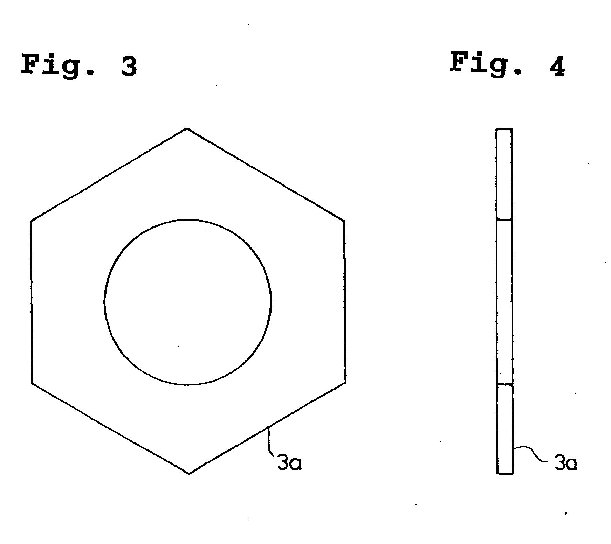

Fig.3 and Fig.4 show a front view and side view of thin plates 3a composing the back yoke 3.

In the back yoke 3 in this embodiment, as shown in Fig.2, a cross-sectional shape of which an outer periphery has a hexagonal fitting plane 4 is formed in hexagon, and a cylindrical permanent magnet 5 is attached to the flat fitting plane 4. In an inner peripheral face of the permanent magnet 5 is formed a flat opposing plane 6 corresponding to the fitting plane 4 of the back yoke 3, and the permanent magnet 5 is attached to the back yoke 3 by adhering the opposing plane 6 and said fitting plane 4.

The permanent magnet 5 is formed by pasting six magnet pieces 7 each having the opposing plane 6 corresponding to the fitting plane 4 of the back yoke in cylinder shape with a bonding agent.

Also, in outer peripheral faces at both end parts in an axial direction of the permanent magnet 5 is formed a step part 12 in step shape so as to make it lower than the outer peripheral face of the permanent magnet 5. In the step part 12 is press-set a sleeve 10 formed in ring shape with a nonmagnetic body so as to prevent magnet pieces 7 from jumping out and breaking by a centrifugal force during rotation.

Since the step part 12 is formed so that its depth is equal to a thickness of the sleeve 10, an outer peripheral face of the sleeve 10 and the outer peripheral face of the permanent magnet 5 is flush with each other.

As this sleeve 10, a nonmagnetic material, such as CFRP (carbon fiber reinforced plastic) and SUS304 stainless steel, is used.

Also, as shown in Fig.1, a hole 13 of a center part is pressure fitted into the rotary shaft 2, two plates 8 for holding the permanent magnet 5 with flat fringe planes are provided, and the permanent magnet 5 is attached to the back yoke 3. The plate 8 is formed with a nonmagnetic material such as SUS304 stainless steel and Inconel.

Next, a production method of the magnet rotor 1 is described.

First, the cylindrical permanent magnet 5 is made up by pasting mutually neighboring magnet pieces 7 by applying a bonding agent between these, the permanent magnet 5 is inserted into an outer peripheral face of the back yoke 3 and attached to the back yoke 3, and then a pair of flat, nonmagnetic plates 8, 8 are pressure fitted to the rotary shaft 2, and the permanent magnet 5 is held at the back yoke 3 by holding it with both plates 8 from both sides.

Next, the step part 12 is formed in an outer peripheral face of the permanent magnet 5 and the outer peripheral face is machined coaxially and cylindrically. Besides, a nonmagnetic sleeve 10 is pressure fitted into the step part 12 and fixed.

The magnet rotor 1 assembled like this is balance adjusted about the rotary shaft based on a bearing part as reference, and is magnetized integrally with the rotary shaft 2 by a multi-polar magnetizing yoke to complete a product.

Also, the high-output AC generator is completed by assembling the magnet rotor 1 into a main body having a stator 11.

As described above, in the magnet rotor 1, since a cross-sectional shape of the back yoke 3 is formed in hexagon (or polygon) and the permanent magnet 5 is adhered and fixed to the polygonal fitting plane 4 of the back yoke 3, the permanent magnet 5 does not cause any rotation gap to the back yoke 3 at all.

Also, since the cross-sectional shape of the outer peripheral face of the back yoke 3 is formed in hexagon (or polygon), it is possible to make only the permanent magnet 5 thick in a center part without changing contact faces and leak magnetic fluxes between N and S poles, and so the magnetic flux density is increased and the output is increased. Also, by the increase in output, it is possible to secure the output as ever even by adopting a uniform magnetization with a low rate of magnetization instead of a method to magnetize and assemble each single pole to secure a high output.

Next, an AC machine applying the magnet rotor 1, such as a motor and a generator, is described.

The AC machine, as shown in Fig.2, is formed having a ring part 14 fixed to a housing, not illustrated, a tooth part 15 discretely arranged along a peripheral direction from the ring part 14 and extending inward in a radial direction, a stator 11 made up with a coil, not illustrated, wound round the tooth part 15, and a magnet rotor 1 as a rotor arranged in a hole 16 formed in a center part of the stator 11.

The number of teeth of the tooth part 15 of the stator 11 shown in Fig.2 is 12 and doubles the number of magnet pieces 7. In the high-output AC machine, when an exhaust gas is supplied to a turbine, not illustrated, attached to the rotary shaft 2 of the magnet rotor 1 and the turbine rotates, the permanent magnet 5 rotates and an electric current is generated in the coil of the stator 11.

In the magnet rotor 1 of the high-output AC machine, since the composition is such that, without providing a sleeve all round the outer peripheral face of the permanent magnet 5, the sleeve 10 is provided only at both end parts of the permanent magnet 5, flexural stress by which the center part of the permanent magnet 5 is pulled outside by an action of a centrifugal force is generated, but since the permanent magnet 5 can be made thicker by forming the cross-sectional shape of the back yoke 3 polygonal and the flexural rigidity is increased by the thickening, there is no particular problem.

Rather, since in addition to that an area of the sleeve 10 covering the outer peripheral face of the permanent magnet 5 is made very small the step part 12 is formed to be lower than the outer peripheral face of the permanent magnet 5, resulting in a reduction in difference between the outer peripheral face of the sleeve 10 and the outer peripheral face of the permanent magnet 5, a clearance C of the permanent magnet 5 and the stator 11 can be made small. Because of this, when the magnet rotor 1 is assembled to a high-output AC generator, the output is considerably increased.

In the magnet rotor 1 shown in Fig.1 and Fig.2, a flat plate is used as the plate 8.

As to the plate 8, besides a flat plate shaped one, a plate having a pan spring effect like a conventional system, namely, by press-setting a hole formed in a center into the rotary shaft, a pan shaped plate strongly holding the permanent magnet with a spring force of a fringe part of the plate may also be used. However, in the magnet rotor 1, since a rotation gap of the permanent magnet 5 can be well prevented by forming the cross-sectional shape of the back yoke 3 in hexagon, aforementioned flat plate is sufficient.

Also, although in this embodiment the permanent magnet 5 and the back yoke 3 are merely fixed by the sleeve 10 and the plate 8 and not mutually connected, the permanent magnet 5 and the back yoke 3 may also be bonded with a bonding agent having a low Young's modulus and a high coefficient of thermal expansion, such as a silicon rubber bond, or fixed with a resin having a high Young's modulus, such as an epoxy resin.

### (Second Embodiment)

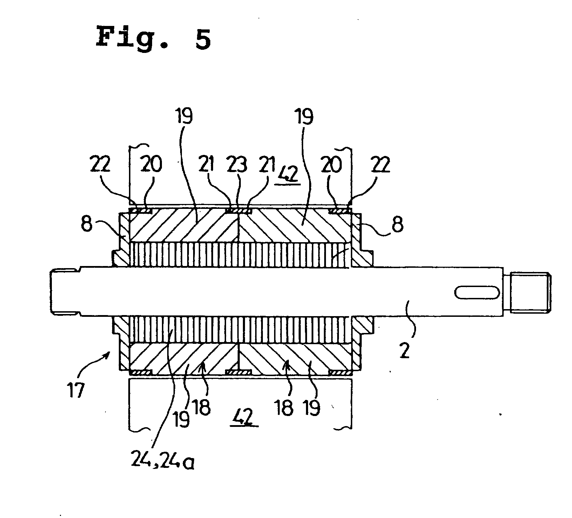

Next, a magnet rotor of the second embodiment of the present invention is described by referencing Fig.5.

In a magnet rotor 17 shown in Fig.5, a cylindrical permanent magnet 18 is made up by pasting six magnet pieces 19 with a bonding agent, and the permanent magnet 18 is arranged two pieces along a shaft direction.

Also, in the rotary shaft 2, a pair of plates 8 are attached to, and two permanent magnets 18, 18 and a back yoke 24 composed of an electromagnetic steel plate or by laminating a plurality of ordinary thin plates 24a made of magnetic bodies along a length direction are held and fixed from both sides.

Also, at both end parts of each permanent magnet 18, 18, step parts 20, 21 are formed respectively, and by press-setting nonmagnetic sleeves 22, 23, such as CFRP or SUS 304 stainless steel, into these step parts 20, 21, permanent magnets 18, 18 to the back yoke 24. Incidentally, the sleeve 23 in a center is formed so as to sit astride the step part 21 of two permanent magnets 18, 18.

Since the magnet rotor 17 is made up by arranging two permanent magnets 18, 18 in an axial direction, it is suitable for making the magnet rotor 17 long in an axial direction. A side view of a high-output AC machine using the magnet rotor 17 is the same as the one shown in Fig.2.

### (Third Embodiment)

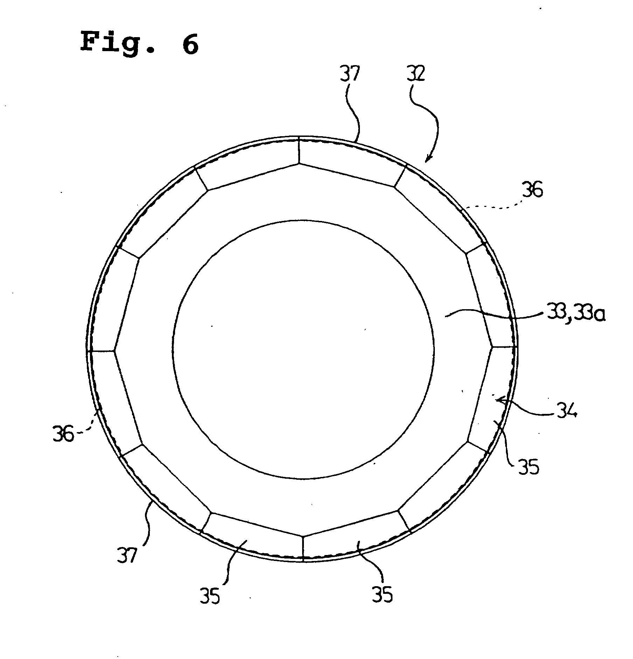

Next, as magnet rotor applied to a retarder brake unit, a magnet rotor of a third embodiment of which a side cross section is shown in Fig.6 is described.

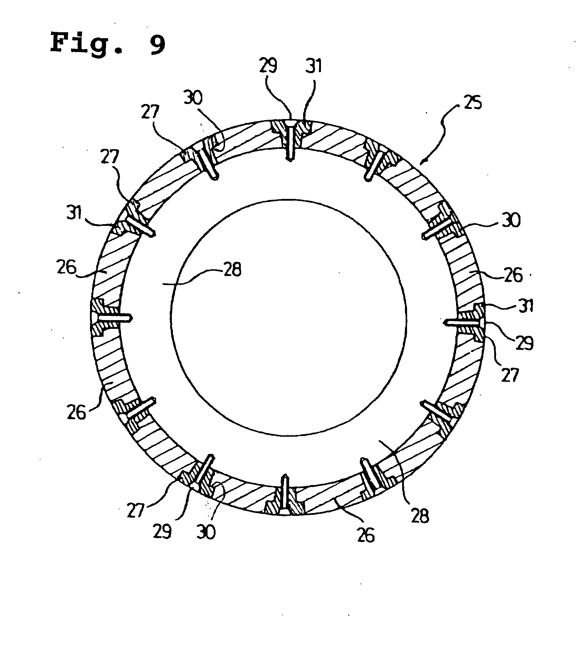

First, as magnet rotor applied to the conventional retarder unit (an auxiliary unit of a brake system), a construction shown in Fig.9 is adopted. In the magnet rotor 25, arc shaped magnet pieces 26 and fastening metals 27 each having an arc shaped surface are alternately assembled multi-pole to a disk shaped back yoke 28 and the fastening metals 27 are fixed with screws 29.

Since a step part 30 is formed in each magnet piece 26, a flange part 31 to be set with the step part 30 is formed in the fastening metal 27, and since each magnet piece 26 is fixed to the back yoke 28 by way of the fastening metal 27, a rotation gap as well as adsorption to the rotor of the permanent magnet can be prevented.

However, since the magnet rotor 25 with the conventional construction of which the magnet piece 26 is arc shaped and fixed to the back yoke 28 requires the fastening metal 27 and the screw 29, there is a problem that the construction is complicated.

As a counterpart of the conventional construction shown in Fig.9, the present invention shows a magnet rotor of the third embodiment of which a side view is shown in Fig.6 and descriptions are given along with the same.

A magnet rotor 32 of the third embodiment is a magnet rotor applied to a retarder brake unit and is an improvement from the construction of the magnet rotor 25 shown in Fig.9 by removing the fastening metal 27 and the screw 29.

The magnet rotor 32 has a back yoke 33 composed of a disc shaped electromagnetic steel plate having a duodecagonal cross sectional shape or by laminating a plurality of ordinary thin plates 33a having magnetism along a length direction, and a ring shaped permanent magnet 34 attached to an outer peripheral face of the back yoke 33, and twelve pieces of magnet pieces 35 are attached to the outer peripheral face of the back yoke 33.

These magnet pieces 35 are mutually pasted with a bonding agent and form the cylindrical permanent magnet 34, and by setting the permanent magnet 34 to the back yoke 33 and holding the permanent magnet 34 from both sides with a pair of flat plates, not illustrated, the permanent magnet 34 is fixed to the back yoke 33. Also, step parts 36 are formed in outer peripheral faces of both end parts of the permanent magnet 34 and a sleeve 37 made of CFRP is press-set into the step part 36, so that the magnet rotor 32 can surely prevent a rotation gap and adsorption to the rotor of the permanent magnet 34.

Also, the permanent magnet 34 and the back yoke 33 may also be bonded with a bonding agent having a low Young's modulus and a high coefficient of thermal expansion, such as a silicon rubber bond, or fixed with a resin having a high Young's modulus, such as an epoxy resin.

In the conventional magnet rotor 25 shown in Fig.9, since the magnet piece 26 and the fastening metal 27 are assembled alternately at an area ratio of approx. 3:1, there is a problem that an output of only about 75% can be obtained compared with a case the back yoke 28 is covered all over alone by a permanent magnet.

Whereas, in the magnet rotor 32 of the present invention shown in Fig. 6, since an entire surface of the back yoke 33 is covered with the permanent magnet 34 and a surface of the permanent magnet 34 is mostly exposed except for a part covered by the sleeve 37, an output of about 95% can be obtained compared with a case the back yoke 33 is covered all over alone by the permanent magnet 34. In this sense, too, the magnet rotor forming the cross section shape of the back yoke in polygon can be said to be an excellent construction that can obtain a high output.

As described above, according to the magnet rotor of the present invention and the high-output AC machine providing the same, the following effects can be attained.
A. Since the magnet rotor is composed as the back yoke is formed cross-sectionally polygonal and to a fitting plane provided in an outer peripheral face are fitted a cylindrical permanent magnet made up with magnet pieces having opposing planes corresponding to the fitting plane, a rotation gap of the permanent magnet to the back yoke can surely be prevented.
B. Also, By making the cross section of the back yoke polygonal, only the permanent magnet can be made thicker in a center part without changing a contact width and leak magnetic fluxes between N and S poles.
   Accordingly, the magnetic flux density is increased to that extent, and a high output can be obtained when the magnet rotor is applied to a high-output AC generator.
C. Also, since the polygonal back yoke is composed of an electromagnetic steel plate or by laminating a plurality of ordinary thin plates having magnetism, machining is made easy and production costs are lowered.
   Also, in the magnet rotor, not by setting the sleeve all over the entire surface of the outer peripheral face of the permanent magnet like the conventional system shown in Fig.8 but by providing step parts only at both end parts of the permanent magnet as shown in Fig.1 and Fig.5 and by press-setting the sleeve to these step parts to make an area of the permanent magnet covered by the sleeve very small, an exposed area of the permanent magnet can be increased very much.
   Accordingly, when the magnet rotor is applied to a generator, the output can be increased dynamically.
D. Further, by providing the step part to set the sleeve lower than the outer peripheral face of the permanent magnet, namely small in diameter, a clearance between the stator and the permanent magnet can be made smaller, and so when the magnet rotor is applied to a generator, the output will be increased dynamically.
   Besides, as the output is increased, it possible to make the magnet rotor compact, compared with the conventional system, and an AC machine using this can also be made compact.
E. Also, in the conventional system, in which the magnet rotor was assembled using magnets that were magnetized pole by pole to secure a high output, it was not possible to magnetize these altogether.
   Whereas in the present invention, simultaneous magnetization of the assembled magnet rotor is made possible, and by adopting this method of uniform magnetization, assembly operations of the magnet rotor can be simplified.
   Incidentally, according to the magnet rotor, the sleeve is provided at both end parts of the permanent magnet and a flexural stress bending the permanent magnet at its center part is generated along a length direction by an action of a centrifugal force, but since the permanent magnet can be made thicker by forming the cross-sectional shape of the back yoke polygonal and the flexural rigidity is increased, there is no particular problem at all.
   Further, in the magnet rotor, by adopting a composition to arrange a plurality of permanent magnets along a shaft direction and provide a sleeve by forming step parts at both end parts of each permanent magnet, a high-output AC generator with a back yoke with a large length can easily be obtained.
F. Also, by producing the magnet rotor by fixing the permanent magnet to the back yoke provided at the rotary shaft, balance adjusting said rotary shaft based on a bearing part as reference and by magnetizing the rotary shaft as a whole by a magnetizing machine, the magnetization process can be brought to the last and balance adjustment of an assembled magnet body can easily be done.
G. Besides, when a generator/motor is composed by arranging the magnet rotor in a hole formed in a center part of a stator formed with a ring part fixed to a housing, a tooth part extending inward from said ring part along a radial direction and a coil wound round said tooth part, a high-output AC machine can be obtained.

## Claims

1. A magnet rotor having a back yoke provided on a rotary shaft and a permanent magnet arranged on an outer peripheral face of the back yoke, wherein
said back yoke is composed of an electromagnetic steel plate or by laminating a thin plate of an ordinary magnetic body and the outer peripheral face thereof is formed into polygon, of which each face is formed as a fitting plane,
said permanent magnet is composed of a plurality of magnet pieces having opposing planes in its inner faces corresponding to said fitting plane, respectively and
said permanent magnet is fixed to said back yoke by adhering said opposing planes of said magnetic pieces with said fitting planes of said back yoke and by press-setting a sleeve on the outer peripheral face of said permanent magnet.

2. The magnet rotor as claimed in claim 1, wherein a pair of nonmagnetic plates for holding said permanent magnet from both sides thereof are attached to said rotary shaft.

3. The magnet rotor as claimed in claim 1 or 2, wherein a step part formed lower than the outer peripheral face thereof is provided at both end parts in an axial direction of the outer peripheral face of said permanent magnet, and said sleeve is press-set in the step part.

4. The magnet rotor as claimed in any one of claims 1 to 3, wherein said permanent magnet is arranged in plurality in parallel in an axial direction thereof.

5. The magnet rotor as claimed in any one of claims 1 to 4, wherein said permanent magnets are bonded with a bonding agent said mutually neighboring magnet pieces.

6. The magnet rotor as claimed in any one of claims 1 to 5, wherein said permanent magnet and said back yoke are bonded with a bonding agent having a low Young's modulus and a high coefficient of thermal expansion, such as a silicon rubber adhesive, or fixed with resin having a high Young's modulus, such as epoxy resin.

7. The magnet rotor as claimed in any one of claims 1 to 6, wherein said sleeve is made of carbon fiber reinforced plastic or nonmagnetic metal.

8. The magnet rotor as claimed in any one of claims 1 to 7, wherein said plate is made of stainless steel like SUS304 and nonmagnetic material such as Inconel.

9. The magnet rotor as claimed in any one of claims 1 to 8, wherein said permanent magnet is fixed to said back yoke, and after balance adjusting said rotary shaft based on a bearing part as reference, magnetized integrally with the rotary shaft by a magnetizing machine.

10. An AC machine with a high output having a ring part fixed to a housing, a tooth part extending from the ring part to the inside in a radial direction, a stator made up with a coil wound round the tooth part, and one of the magnet rotors as claimed in any one of claims 1 to 9 arranged in said ring part of the stator.
